Europäisches Patentamt

European Patent Office

Office européen des brevets

(19)

(11) Veröffentlichungsnummer : **0 342 670 B1**

(12) **EUROPÄISCHE PATENTSCHRIFT**

(45) Veröffentlichungstag der Patentschrift :
**13.05.92 Patentblatt 92/20**

(51) Int. Cl.⁵ : **A22B 7/00**, B65G 25/02

(21) Anmeldenummer : **89108943.5**

(22) Anmeldetag : **18.05.89**

(54) **Vorrichtung zum Transportieren von insbesondere geschlachteten Tierkörpern.**

(30) Priorität : **20.05.88 DE 8806617 U**

(43) Veröffentlichungstag der Anmeldung :
**23.11.89 Patentblatt 89/47**

(45) Bekanntmachung des Hinweises auf die
Patenterteilung :
**13.05.92 Patentblatt 92/20**

(84) Benannte Vertragsstaaten :
**AT BE DE ES FR IT NL**

(56) Entgegenhaltungen :
**WO-A-89/07080**
**DE-A- 3 141 130**
**FR-A- 1 435 677**
**FR-A- 2 566 888**
**GB-A- 1 128 491**

(73) Patentinhaber : **Vogt-Werke GmbH u. Co. KG**
**Höbäckerweg 5**
**W-6490 Schlüchtern (DE)**

(72) Erfinder : **Zeller, Norbert, Dipl.-Ing.**
**Waldsiedlung 10**
**W-6492 Sinntal 3 (DE)**

(74) Vertreter : **Stoffregen, Hans-Herbert, Dr.**
**Dipl.-Phys. et al**
**Patentanwalt, Salzstrasse 11 a, Postfach 21 44**
**W-6450 Hanau 1 (DE)**

EP 0 342 670 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zum Transportieren von Gegenständen wie geschlachteten Tierkörpen, die an Haken aufgehängt sind, die ihrerseits entlang einer Bahn diskontinuierlich bewegbar sind. Ferner bezieht sich die Erfindung auf ein Verfahren zum diskontinuierlichen Transport von von Haken ausgehenden Gegenständen wie geschlachteten Tierkörpern entlang einer Bahn.

Für die bennanten Vertragsstaaten AT, BE, DE, FR, IT und NL gilt der Inhalt der früheren internationalen Anmeldung WO A 89/07 080 als Stand der Technik gemäß Art 54(3) EPÜ. In der WO A 89/07 080 ist eine Transportvorrichtung beschrieben, die einen im Querschnitt U-förmigen, oben offenen, stationären Träger enthält, in dem eine Stange hin- und herbewegbar gelagert ist.

Wenn die Stange in der einen Richtung bewegt wird, erhebt sich ihre Oberseite über das Niveau der Öffnung. Wird die Stange in der anderen Richtung bewegt, dann befindet sich die Oberseite der Stange unterhalb der Öffnung des U-förmigen Trägers. Für die Vertragsstaaten AT, BE, DE, FR, IT und NL wurde ein gesonderter Anspruch 1 eingereicht, in den Vorrichtung einen Haken aufweist.

Um z. B. in der fleischverarbeitenden Industrie wie in Schlachthäusern, Wurstfabriken oder ähnlichem geschlachtete Tierkörper zu transportieren, werden diese von Haken abhängend auf sogenannte Rohrbahnen verschoben. Diese umfassenden Rohre, die an einem Traggerüst bestehend aus z. B. I- oder U-Profilen mit Konsolen befestigt sind. Die Rohrbahn selbst verläuft grundsätzlich parallel zum Fußboden und kann z. B. zur Überwindung von Niveau-Unterschieden oder bei der Zuführung oder Verteilung von geschlachteten Tierkörpern ein Gefälle oder eine Steigung aufweisen.

Der Transport selbst kann zum einen durch ein manuelles Verschieben der Haken entlang der Rohrbahn und zum anderen mittels pneumatisch, hydraulisch oder elektrisch angetriebener Förderaggregate erfolgen.

Zu diesen Förderaggregaten gehören u.a. Endloskettenförderer, die oberhalb der Rohrbahn verlaufen und von den Ketten ausgehende Mitnehmer aufweisen, die mit den Haken wechselwirken. Hierdurch ist eine kontinuierliche Förderung möglich.

Es gibt auch Schubstangenförderer, die von einer Schubstange ausgehende Mitnehmer aufweisen, die ihrerseits mit den Haken zusammenwirken. Die Schubstange wird mit Pneumatik- oder Hydraulikzylindern verschoben. Hierbei ist der Hub des Zylinders größer als der Abstand der Mitnehmer untereinander. Es erfolgt eine diskontinuierliche Förderung.

Der Schubstangenförderer ermöglicht einen kostengünstigen Transport, wobei jedoch der Nachteil in Kauf genommen werden muß, daß die Schubstange mit dem Pneumatik- oder Hydraulikzylinder oberhalb der Rohrbahn angeordnet ist. Hierdurch ist der Nachteil gegeben, daß ein erheblicher Raumbedarf besteht. Gleiches gilt im übrigen auch für einen Endloskettenförderer.

Ein weiterer Nachteil der zwangsangetriebenen Transportvorrichtung ist darin zu sehen, daß eine Transportrichtungsumkehr nur mit konstruktiv aufwendigen Maßnahmen möglich ist.

Aufgabe der vorliegenden Erfindung ist es, eine Vorrichtung und ein Verfahren der eingangs beschriebenen Art so auszubilden, daß ohne zusätzlichen Raumbedarf oberhalb der Bahn ein problemloses Transportieren der Haken und damit der von diesen ausgehenden Gegenstände möglich ist. Auch soll die Möglichkeit geschaffen sein, die Haken in beliebiger Richtung entlang der Transportbahn zu bewegen, ohne daß zusätzliche konstruktive Maßnahmen erforderlich sind.

Die Aufgabe wird erfindungsgemäß gegenständlich im wesentlichen dadurch gelöst, daß die Bahn einen mit dem Haken wechselwirkenden bzw. wechsetwirkbaren anhebbaren und absenkbaren Abschnitt aufweist, der seinerseits in Längsrichtung der Bahn verschiebbar ist. Der anhebbare Abschnitt wirkt folglich mit dem Haken derart zusammen, daß nach dessen Anheben der mit dem Haken wechselwirkende Bereich oberhalb der ansonsten starr verlaufenden Bahnteile verläuft, so daß dann durch Längsverschiebung des Abschnitts der Transport des Hakens erfolgt. Es sind folglich keine Mitnehmer oder ähnliche Maßnahmen erforderlich, um den Haken entlang der Bahn zu transportieren.

Da insbesondere der Abschnitt mittels eines Pneumatik- oder Hydraulikzylinders verschiebbar ist, ist folglich hierdurch die Möglichkeit gegeben, den Haken in beliebiger Richtung entlang der Bahn zu verschieben.

Insbesondere zeichnet sich die Erfindung dadurch aus, daß der entlang der Bahn verschiebbare Abschnitt vorzugsweise mittels zumindest zwei zueinander beabstandeter Exzenter anhebbar ist, die synchron z.B. über ein von einem Antrieb wie Pneumatik- oder Hydraulikzylinder betätigbares Gestänge verstellbar sind. Um ein reibungsarmes Verschieben des auch als Hubbalken zu bezeichnenden Abschnitts zu ermöglichen, sind die Exzenter mit Wälzlagern versehen, vorzugsweise von diesen umgeben, auf denen sich der Abschnitt abstützt.

Die das Anheben und das Längsverschieben bewirkenden Antriebe wie Pneumatik- und Hydraulikzylinder sind nach einer weiteren Ausgestaltung der Erfindung seitlich zur Rohrbahn verlaufend angeordnet, so daß erkennbar ein zusätzlicher Raum oberhalb der Bahn selbst nicht erforderlich ist.

Der anhebbare und absenkbare Abschnitt ist vorzugsweise zwischen starren äußeren Bahnabschnitten angeordnet, die z.B. als Flacheisen ausgebildet sein können, wobei die mit den Haken wechselwirkenden Oberseiten sowohl von den Flacheisen als auch von dem Abschnitt der Hakengeometrie angepaßt sein können.

Ein weiteres Merkmal der erfindungsgemäßen Lehre ist darin zu sehen, daß zumindest der mit dem Haken wechselwirkende Bereich des Abschnitts und/oder der starren Bahnabschnitte zur genauen Positionierung der Haken strukturiert ist. Hierdurch ist sichergestellt, daß beim Verschieben des Abschnitts ein unkontrolliertes Verrücken des Hakens und damit des zu transportierenden Gegenstandes unterbleibt. Diese Strukturierung kann durch eine Wellengeometrie bzw. durch zueinander beabstandeten Vertiefungen realisiert werden.

Das Verfahren zum diskontinuierlichen Transport der eingangs beschriebenen Art zeichnet sich dadurch aus, daß der Haken auf einem beweglichen Abschnitt der Bahn positioniert wird, der zum Transport des Hakens zunächst angehoben und sodann entlang der Bahn verschoben wird.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines in der Zeichnung dargestellten bevorzugten Ausführungsbeispiels.

Es zeigen;

Fig. 1 eine Seitenansicht einer erfindungsgemäßen Vorrichtung zum diskontinuierlichen Transport von Gegenständen,

Fig. 2 die Vorrichtung gemäß Fig. 1 in Draufsicht und

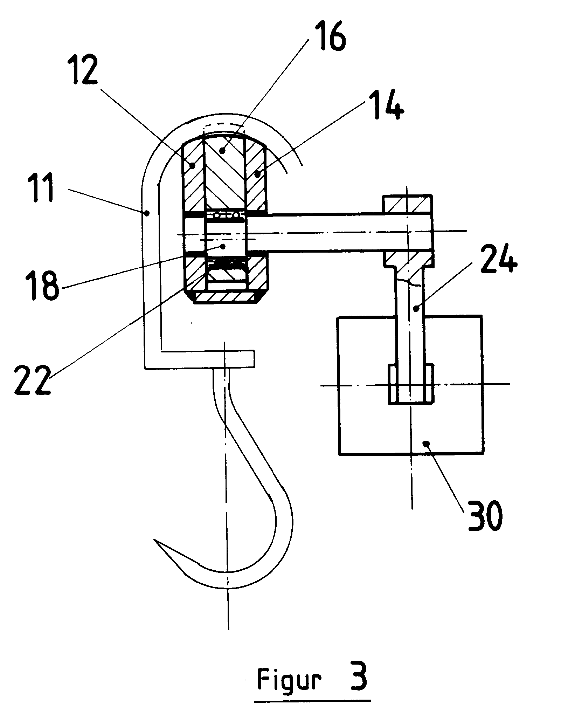

Fig. 3 eine Schnittdarstellung der Fördervorrichtung gemäß Fig. 1 und 2 mit angeordnetem Haken.

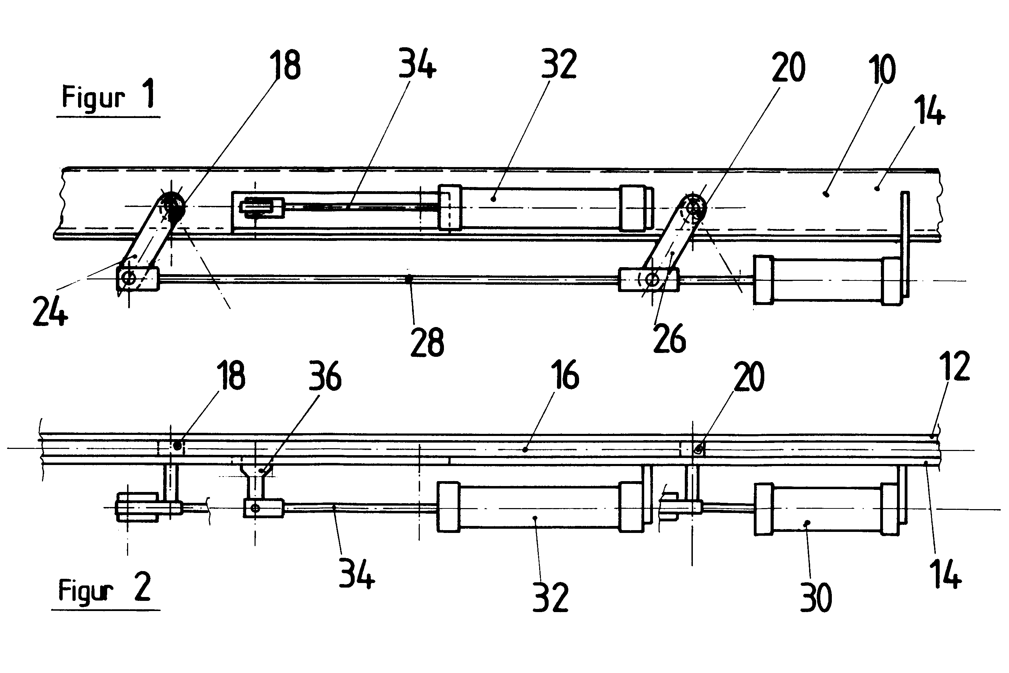

In Fig. 1 ist ein Abschnitt einer Bahn (10) dargestellt, entlang der von Haken (11) abhängende Gegenstände wie insbesondere geschlachteten Tierkörper oder aber auch sonstige Gegenständen wie Kleider oder ähnliches transportiert werden. Die Bahn (10) besteht aus zwei starren äußeren Abschnitten (12) und (14), die im Ausführungsbeispiel Flacheisen sind. Zwischen den starren Bahnabschnitten (12) und (14) ist ein beweglicher Abschnitt (16) angeordnet, der als Hubbalken bezeichnet werden kann. Der Hubbalken (16) ist sowohl anheb- und absenkbar als auch entlang der Bahn (10) verschiebbar ausgebildet.

Das Anheben des Abschnitts (16) erfolgt im Ausführungsbeispiel über Exzenter (18) und (20), die zueinander beabstandet angeordnet sind. Die Exzenter (18) und (20) können ihrerseits von Wälzlagern umschlossen sein, von denen eines, nämlich das den Exzenter (18) umgebende mit dem Bezugszeichen (22) versehen ist. Auf diesem Wälzlager stützt sich der Abschnitt (16) bei seinen Verschiebungen entlang der Bahn (10) ab. Aus diesem Grund weist der Abschnitt (16) im Bereich der Exzenter (18) und (20) einen Ausschnitt auf, so daß ein Abstützen des Abschnitts (16) nur im oberen Scheitelbereich der Wälzlager erfolgt.

Um ein synchrones Verstellen der Exzenter und damit ein parallel zur Längsachse der Rohrbahn (10) erfolgendes Anheben des Abschnitts (16) sicherzustellen, sind die Exzenter (18) und (20) über Hebel (24) und (26) mit einer Schubstange (28) verbunden, die ihrerseits mittels eines seitlich an der Rohrbahn (10) verlaufenden Hydraulik- oder Pneumatikzylinder (30) verstellbar sind.

Das Absenken des Abschnitts (16) erfolgt bei umgekehrt geschaltetem Zylinder (30), sofern dieser zweiseitig beaufschlagbar ist. Bei nur einseitig beaufschlagbarem Zylinder erfolgt das Zurückfahren des Kolbens durch das von dem Haken (11) ausgehende Gewicht des zu transportierenden Gegenstandes.

Die Längsverschiebung des Hubbalkens (16) erfolgt über einen weiteren Pneumatik- oder Hydraulikzylinder (32), der ebenfalls seitlich zur Bahn (10) verläuft und an dieser befestigt ist. Von dem Zylinder (32) geht eine Schubstange (34) aus, die über ein Verbindungsstück (36) mit dem Hubbalken (16) verbunden ist. Hierzu weist die Bahn (10) einen entsprechenden Längsschlitz in dem Flacheisen (14) auf.

Um ein genaues Positionieren des Hakens (11) auf der Oberseite der Bahn (10) zu ermöglichen, weisen die mit dem Haken wechselwirkenden Bereiche der Bahn (10), insbesondere des Abschnitts (16) eine Strukturierung auf, die z.B. eine wellenförmige Geometrie aufweisen kann.

Erkennbar kann mittels der erfindungsgemäßen Vorrichtung ein Transport sowohl nach rechts als auch nach links erfolgen, je nachdem, ob beim Ausfahren bzw. Zurückfahren der Schubstange der Abschnitt (16) angehoben oder fluchtend zu den Bahnabschnitten (12) und (14) ausgerichtet ist.


## Patentansprüche

### Patentansprüche für folgenden Vertragsstaaten : AT, BE, DE, FR, IT, NL

1. Vorrichtung mit einer Bahn und einem Haken (11), der zum Transportieren von einem Gegenstand wie geschlachtetem Tierkörper, der an dem Haken (11) ausgehängt ist, diskontinuierlich entlang der Bahn (10) bewegbar ist,
**dadurch gekennzeichnet,**
daß die Bahn (10) einen mit dem Haken (11) wechselwirkenden anhebbaren und absenkbaren Abschnitt (16) aufweist, der seinerseits in Längsrichtung der Bahn (10) verschiebbar ist.

2. Vorrichtung nach Anspruch 1,

**dadurch gekennzeichnet,**

daß der Abschnitt (16) vorzugsweise zwischen starren äußeren Bahnabschnitten (12, 14) verläuft.

3. Vorrichtung nach zumindest Anspruch 1,

**dadurch gekennzeichnet,**

daß der Abschnitt (16) vorzugsweise mittels zumindest zwei zueinander beabstandeten Exzentern (18, 20) anhebbar ist, die synchron z.B. über einen von einem Antrieb wie Pneumatik-oder Hydraulikzylinder (30) betätigbares Gestänge (24, 26, 28) verstellbar sind.

4. Vorrichtung nach Anspruch 3,

**dadurch gekennzeichnet,**

daß die Exzenter (18, 20) mit Wälzlagern (22) versehen sind, auf denen der Abschnitt (16) abstützbar ist.

5. Vorrichtung nach zumindest Anspruch 1, **dadurch gekennzeichnet,**

daß auf den Abschnitt (16) zu dessen Längsverschiebung vorzugsweise ein Pneumatik- oder Hydraulikzylinder (32) einwirkt.

6. Vorrichtung nach zumindest einem der vorhergehenden Ansprüche,

**dadurch gekennzeichnet,**

daß der auf den Abschnitt (16) einwirkende Pneumatik- oder Hydraulikzylinder (32) und/oder der die Exzenter betätigende Pneumatik- oder Hydraulikzylinder (30) vorzugsweise seitlich der Bahn (10) verläuft und an dieser befestigt ist.

7. Vorrichtung nach zumindest einem der vorhergehenden Ansprüche,

**dadurch gekennzeichnet,**

daß der mit dem Haken (11) wechselwirkende Bereich des Abschnitts (16) und/oder der starren Bahnabschnitte (12, 14) zur genauen Positionierung des Hakens strukturiert ist.

8. Verfahren zum diskontinuierlichen Transport von von einem Haken ausgehenden Gegenstand wie geschlachtetem Tierkörper entlang einer Bahn,

**dadurch gekennzeichnet,**

daß der Haken auf einem beweglichen Abschnitt der Bahn positioniert wird, der zum Transport des Hakens zunächst angehoben und sodann entlang der Bahn verschoben wird.

**Patentansprüche für folgende Vertragsstaat : ES**

1. Vorrichtung mit einer Bahn zum Transportieren von einem Gegenstand wie geschlachtetem Tierkörper, der an einem Haken (11) aufgehängt ist, der seinerseits entlang der Bahn (10) diskontinuierlich bewegbar ist,

**dadurch gekennzeichnet,**

daß die Bahn (10) einen mit dem Haken (11) wechselwirkbaren anhebbaren und absenkbaren Abschnitt (16) aufweist, der seinerseits in Längsrichtung der Bahn verschiebbar ist.

2. Vorrichtung nach Anspruch 1,

**dadurch gekennzeichnet,**

daß der Abschnitt (16) vorzugsweise zwischen starren äußeren Bahnabschnitten (12, 14) verläuft.

3. Vorrichtung nach zumindest Anspruch 1,

**dadurch gekennzeichnet,**

daß der Abschnitt (16) vorzugsweise mittels zumindest zwei zueinander beabstandeten Exzentern (18, 20) anhebbar ist, die synchron z.B. über einen von einem Antrieb wie Pneumatik- oder Hydraulikzylinder (30) betätigbares Gestänge (24, 26, 28) verstellbar sind.

4. Vorrichtung nach Anspruch 3,

**dadurch gekennzeichnet,**

daß die Exzenter (18, 20) mit Wälzlagern (22) versehen sind, auf denen der Abschnitt (16) abstützbar ist.

5. Vorrichtung nach zumindest Anspruch 1,

**dadurch gekennzeichnet,**

daß auf den Abschnitt (16) zu dessen Längsverschiebung vorzugsweise ein Pneumatik- oder Hydraulikzylinder (32) einwirkt.

6. Vorrichtung nach zumindest einem der vorhergehenden Ansprüche,

**dadurch gekennzeichnet,**

daß der auf den Abschnitt (16) einwirkende Pneumatik- oder Hydraulikzylinder (32) und/oder der die Exzenter betätigende Pneumatik- oder Hydraulikzylinder (30) vorzugsweise seitlich der Bahn (10) verläuft und an dieser befestigt ist.

7. Vorrichtung nach zumindest einem der vorhergehenden Ansprüche,

**4**

**dadurch gekennzeichnet,**

daß der mit dem Haken (11) wechselwirkende Bereich des Abschnitts (16) und/oder der starren Bahnabschnitte (12, 14) zur genauen Positionierung des Hakens strukturiert ist.

8. Verfahren zum diskontinuierlichen Transport von von einem Haken ausgehenden Gegenstand wie geschlachtetem Tierkörper entlang einer Bahn,

**dadurch gekennzeichnet,**

daß der Haken auf einem beweglichen Abschnitt der Bahn positioniert wird, der zum Transport des Hakens zunächst angehoben und sodann entlang der Bahn verschoben wird.

## Claims

### Claims for the following Contracting States : AT, BE, DE, FR, IT, NL

1. A device having a track and a hook (11) that is discontinuously movable along said track (10) for conveying an object such as a slaughtered animal suspended from said hook (11),

**wherein**

said track (10) has a section (16) that can be raised and lowered and that interacts with said hook (11), and is in its turn movable in the longitudinal direction of said track.

2. A device according to Claim 1,

**wherein**

said section (16) runs preferably between rigid outer track sections (12, 14).

3. A device according to Claim 1 at least,

**wherein**

said section (16) is preferably raisable by means of at least two eccentrics (18, 20) at a distance from one another, said eccentrics being synchronously adjustable for example via a lever system (24, 26, 28) actuatable by a drive unit such as a pneumatic or hydraulic cylinder (30).

4. A device according to Claim 3,

**wherein**

said eccentrics (18, 20) are provided with antifriction bearings (22) on which said section is supportable.

5. A device according to Claim 1 at least,

**wherein**

a pneumatic or hydraulic cylinder (32) preferably acts on said section (16) in order to move said section in the longitudinal direction.

6. A device according to at least one of the previous claims,

**wherein**

said pneumatic or hydraulic cylinder (32) acting on said section (16) and/or said pneumatic or hydraulic cylinder (30) operating said eccentrics is disposed preferably alongside said track (10) and is fastened thereto.

7. A device according to at least one of the previous claims,

**wherein**

the area of said section (16) and/or said rigid track sections (12, 14) interacting with said hook (11) is structured for precise positioning of said hook.

8. A method for discontinuous conveying along a track of an object such as a slaughtered animal suspended from a hook,

**wherein**

said hook is positioned on a movable section of said track that is first lifted and then moved along said track in order to convey said hook.

### Claim for the following Contracting State : ES

1. A device having a track for conveying an object such as a slaughtered animal suspended from a hook (11) that is in its turn discontinuously movable along said track (10),

**wherein**

said track (10) has a section (16) that can be raised and lowered and that can interact with said hook (11) and is in its turn movable in the longitudinal direction of said track.

2. A device according to Claim 1,

**wherein**

said section (16) runs preferably between rigid outer track sections (12, 14).

EP 0 342 670 B1

3. A device according to Claim 1 at least,

**wherein**

said section (16) is preferably raisable by means of at least two eccentrics (18, 20) at a distance from one another, said eccentrics being synchronously adjustable for example via a lever system (24, 26, 28) actuatable by a drive unit such as a pneumatic or hydraulic cylinder (30).

4. A device according to Claim 3,

**wherein**

said eccentrics (18, 20) are provided with antifriction bearings (22) on which said section is supportable.

5. A device according to Claim 1 at least,

**wherein**

a pneumatic or hydraulic cylinder (32) preferably acts on said section (16) in order to move said section in the longitudinal direction.

6. A device according to at least one of the previous claims,

**wherein**

said pneumatic or hydraulic cylinder (32) acting on said section (16) and/or said pneumatic or hydraulic cylinder (30) operating said eccentrics is disposed preferably alongside said track (10) and is fastened thereto.

7. A device according to at least one of the previous claims,

**wherein**

the area of said section (16) and/or said rigid track sections (12, 14) interacting with said hook (11) is structured for precise positioning of said hook.

8. A method for discontinuous conveying along a track of an object such as a slaughtered animal suspended from a hook,

**wherein**

said hook is positioned on a movable section of said track that is first lifted and then moved along said track in order to convey said hook.


**Revendications**

**Revendications pour les Etats contractants suivants : AT, BE, DE, FR, IT, NL**

1. Dispositif doté d'une voie et d'un crochet (11) déplacable de façon discontinue le long de la voie (10) pour le transport d'un objet, tel qu'un corps d'animal abattu, lequel est suspendu au crochet (11),

**caractérisé en ce que**

la voie (10) présente une section relevable et abaissable (16) interagissant avec le crochet (11), section qui de son côté est déplaçable dans le sens longitudinal de la voie (10).

2. Dispositif suivant la revendication n° 1,

**caractérisé en ce que**

la section (16) suit de préférence un tracé compris entre des sections de voie extérieures fixes (12, 14).

3. Dispositif suivant au moins la revendication n° 1,

**caractérisé en ce que**

la section (16) est de préférence relevable à l'aide d'au moins deux excentriques (18, 20) mutuellement espacés et réglables de manière synchrone, par exemple d'une tringlerie (24, 26, 28) actionnable par un entraînement tel qu'un vérin pneumatique ou hydraulique (30).

4. Dispositif suivant au moins la revendication n°3,

**caractérisé en ce que**

les excentriques (18, 20) sont dotés de paliers à rouleaux (22) sur lesquels s'appuie la section (16).

5. Dispositif suivant au moins la revendication n° 1,

**caractérisé en ce qu'**

agit sur la section (16), dans le sens de son déplacement longitudinal, de préférence un vérin pneumatique ou hydraulique (32).

6. Dispositif suivant l'une au moins des revendications précédentes,

**caractérisé en ce que**

le vérin pneumatique ou hydraulique (32) agissant sur la section (16) et/ou le vérin pneumatique ou hydraulique (30) actionnant les excentriques suit de préférence un tracé latéral à la voie (10) et est fixé sur celle-ci.

7. Dispositif suivant l'une au moins des revendications précédentes,

**caractérisé en ce que**

la partie de la section (16) interagissant avec le crochet (11) et/ou des sections de voie rigides (12, 14) est

6

structurée pour le positionnement exact du crochet.

7. Procédé destiné au transport discontinu, le long d'une voie, d'un objet partant d'un crochet, tel qu'un corps d'animal abattu,

**caractérisé en ce que**

le crochet est positionné sur une section mobile de la voie, section qui est d'abord relevée pour le transport du crochet, puis déplacée le long de la voie.

**Revendications pour l'Etat contractant suivant : ES**

1. Dispositif doté d'une voie pour le transport d'un objet, tel qu'un corps d'animal abattu, lequel est suspendu à un crochet (11) qui de son côté se déplace de façon discontinue le long de la voie (10),

**caractérisé en ce que**

la voie (10) présente une section relevable et abaissable (16) interagissant avec le crochet (11), section qui de son côté est déplacable dans le sens longitudinal de la voie.

2. Dispositif suivant la revendication n° 1,

**caractérisé en ce que**

la section (16) suit de préférence un tracé compris entre des sections de voie extérieures fixes (12, 14).

3. Dispositif suivant au moins la revendication n° 1,

**caractérisé en ce que**

la section (16) est de préférence relevable à l'aide d'au moins deux excentriques (18, 20) mutuellement espacés et réglables de manière synchrone, par exemple d'une tringlerie (24, 26, 28) actionnable par un entraînement tel qu'un vérin pneumatique ou hydraulique (30).

4. Dispositif suivant au moins la revendication n° 3,

**caractérisé en ce que**

les excentriques (18, 20) sont dotés de paliers à rouleaux (22) sur lesquels s'appuie la section (16).

5. Dispositif suivant au moins la revendication n° 1,

**caractérisé en ce qu'**

agit sur la section (16), dans le sens de son déplacement longitudinal, de préférence un vérin pneumatique ou hydraulique (32).

6. Dispositif suivant l'une au moins des revendications précédentes,

**caractérisé en ce que**

le vérin pneumatique ou hydraulique (32) agissant sur la section (16) et/ou le vérin pneumatique ou hydraulique (30) actionnant les excentriques suit de préférence un tracé latéral à la voie (10) et est fixé sur celle-ci.

7. Dispositif suivant l'une au moins des revendications précédentes,

**caractérisé en ce que**

la partie de la section (16) interagissant avec le crochet (11) et/ou des sections de voie rigides (12, 14) est structurée pour le positionnement exact du crochet.

8. Procédé destiné au transport discontinu, le long d'une voie, d'un objet partant d'un crochet, tel qu'un corps d'animal abattu,

**caractérisé en ce que**

le crochet est positionné sur une section mobile de la voie, section qui est d'abord relevée pour le transport du crochet, puis déplacée le long de la voie.

Figur 1

18  34  32  20  10  14

24

28  26

Figur 2

18  36  16  20  12

34  32  30  14

EP 0 342 670 B1

Figur 3